Europäisches Patentamt

European Patent Office

Office européen des brevets

(19)

(11) **EP 1 115 189 B1**

(12) **EUROPEAN PATENT SPECIFICATION**

(45) Date of publication and mention
of the grant of the patent:
**14.04.2004 Bulletin 2004/16**

(51) Int Cl.⁷: **H02K 1/27**

(21) Application number: **01101010.5**

(22) Date of filing: **19.02.1998**

(54) **Permanent magnet type synchronous motor**

Permanentmagnet-Synchronmotor

Moteur synchrone du type à aimants permanents

(84) Designated Contracting States:
**DE FR IT**

(30) Priority: **21.02.1997 JP 3794597**
**18.11.1997 JP 31712097**

(43) Date of publication of application:
**11.07.2001 Bulletin 2001/28**

(62) Document number(s) of the earlier application(s) in
accordance with Art. 76 EPC:
**98102909.3 / 0 860 929**

(73) Proprietor: **AISIN AW CO., LTD.**
**Anjo-shi Aichi-ken 444-11 (JP)**

(72) Inventors:
• **Yamaguchi, Yasuo**
**Anjo-shi, Aichi 444-11 (JP)**
• **Hasebe, Masahiro**
**Anjo-shi, Aichi 444-11 (JP)**
• **Wakuta, Satoru**
**Anjo-shi, Aichi 444-11 (JP)**

(74) Representative: **VOSSIUS & PARTNER**
**Siebertstrasse 4**
**81675 München (DE)**

(56) References cited:
**EP-A- 0 048 966**

• **PATENT ABSTRACTS OF JAPAN vol. 097, no.
002, 28 February 1997 (1997-02-28) & JP 08
256440 A (YASKAWA ELECTRIC CORP), 1
October 1996 (1996-10-01)**
• **PATENT ABSTRACTS OF JAPAN vol. 097, no.
004, 30 April 1997 (1997-04-30) & JP 08 340651 A
(TOSHIBA CORP), 24 December 1996
(1996-12-24)**

## Description

The present invention relates to a permanent magnet type synchronous motor.

In the related art, the permanent magnet type synchronous motor comprising a rotor rotatably supported and a stator arranged around the rotor. This rotor is equipped with a rotor iron core, and permanent magnets arranged in a plurality of portions in the circumferential direction of the rotor iron core, and the stator is equipped with a stator iron core and coils arranged in a plurality of portions arranged in the circumferential direction of the stator iron core.

In a permanent magnet type synchronous motor of a surface magnet type having sector-shaped permanent magnets exposed to the outer circumferential edge of the rotor iron core, the relative magnetic permeability of the permanent magnets is substantially at 1 so that the substantial air gap length, as taken from the stator side, is the sum of the gap between the stator and the rotor and the thickness of the permanent magnets. This lowers the reaction of the stator to make the field-weakening control difficult.

Thus, there has been provided (in JP-A-8-107639) a permanent magnet type synchronous motor of an internal magnet type in which the permanent magnets are buried in the rotor iron core. In this case, the substantial air gap length, as taken from the stator side, is equal to the gap between the stator and the rotor so that the reaction of the stator is increased to facilitate the field-weakening control.

Since the permanent magnets having a high magnetic resistance are arranged on the magnetic path of a d-axis but not on the magnetic path of a q-axis, on the other hand, the magnetic resistance changes with the position in the circumferential direction so that a q-axis inductance Lq grows larger than a d-axis inductance Ld to exhibit the counter saliency. By feeding a proper d-axis current, therefore, it is possible to generate not only the magnet torque on. the basis of the magnetic flux of the permanent magnets and the q-axis current but also the reluctance torque, thereby to reduce the q-axis current necessary for generating the torque.

In the aforementioned permanent magnet type synchronous motor of the related art, however, the size of the portions outside of the permanent magnets in the radial direction of the rotor iron core has to be enlarged so that a sufficient strength may be provided for the centrifugal force to be generated in the permanent magnets when the synchronous motor is rotated at a high speed. However, both the centrifugal force due to the own weight of the portions outside of the permanent magnets in the radial direction of the rotor iron core and the centrifugal force to be generated in the permanent magnets are applied to the relative thin portions outside of the end portions of the permanent magnets in the radial direction of the rotor iron core, so that the strength of the rotor iron core is lowered.

It is, therefore, conceivable to increase the size of the portions outside of the end portions of the permanent magnets in the radial direction of the rotor iron core. In this case, however, the leakages of magnetic fluxes increase so much that not only a high torque cannot be generated but also a distortion is caused in the magnetic flux distribution of the gaps to generate harmonic components in the magnetic flux density waveforms thereby to cause torque oscillations.

The invention has an object to solve the aforementioned problems of the permanent magnet type synchronous motor of the related art and to provide a permanent magnet type synchronous motor which can enhance the strength of the rotor iron core and generate a high torque thereby to suppress the generation of toque oscillations.

This object is achieved by the features of the claims.

There is provided a permanent magnet type synchronous motor which comprises: a rotor iron core rotatably arranged and having holes in a plurality of portions in the circumferential direction; permanent magnets assembled in the holes; a stator iron core; and coils arranged in the stator iron core.

Moreover, the above-described permanent magnet includes a straight portion extending widthwise, tapered portions formed at both ends of the straight portion and each extending obliquely outward in a direction of approaching the other, and an arcuate portion jointing the two tapered portions and, is supported by tapered portions formed at both ends of the holes and each extending obliquely outward in a direction of approaching the other.

In another permanent magnet type synchronous motor, moreover, a clearance is formed between the arcuate portion of the permanent magnet and the arcuate portion of the rotor iron core.

In still another permanent magnet type synchronous motor, moreover, the tapered portions and the arcuate portion of the permanent magnet are magnetized to one polarity whereas the straight portion of the permanent magnet is magnetized to the other polarity.

A permanent magnet type synchronous motor of the invention comprises: a rotor rotatably arranged and including a rotor iron core and permanent magnets arranged in the vicinity of the outer circumferential edge of the rotor iron core; and a stator arranged around the outer circumference of the rotor and including a stator iron core and coils wound on the stator iron core.

Moreover, the above-described permanent magnet includes a main magnetic pole portion, and auxiliary pole portions made integral with the main magnetic pole portion at the magnetic pole end portions across bent portions and magnetized to the same polarity as that of the main magnetic pole portion, so that the magnetic paths at the magnetic pole end portions are saturated by the magnetic fluxes flowing out from the auxiliary pole portions.

In still another permanent magnet type synchronous motor of the invention, moreover, the auxiliary pole portion has tapered portions.

In still another permanent magnet type synchronous motor of the invention, moreover, holes matching the permanent magnets and having tapered portions are formed in a plurality of portions in the circumferential direction of the rotor iron core, and the permanent magnets are individually assembled in the holes and supported by the tapered portions.

In still another permanent magnet type synchronous motor of the invention, moreover, the opening angle θ of the main magnetic pole portion is set to about the following value of the slot pitch p of the stator iron core:

$$\theta = (n + 1/2) \cdot p \text{ (wherein n: an integer).}$$

Fig. 1 is a sectional view of an essential portion of a rotor in the first embodiment of the invention.

Fig. 2 is a longitudinal sectional view of a permanent magnet type synchronous motor according to the first embodiment of the invention.

Fig. 3 is a transverse sectional view of an essential portion of the permanent magnet type synchronous motor according to the first embodiment of the invention.

Fig. 4 is a diagram comparing the first characteristics of the permanent magnet type synchronous motor.

Fig. 5 is a diagram of the first characteristics of the permanent magnet type synchronous motor according to the first embodiment of the invention.

Fig. 6 is a diagram comparing the second characteristics of the permanent magnet type synchronous motor.

Fig. 7 is a diagram of the second characteristics of the permanent magnet type synchronous motor according to the first embodiment of the invention.

Fig. 8 is a diagram comparing the third characteristics of the permanent magnet type synchronous motor.

Fig. 9 is an enlarged view of a rotor in the second embodiment of the invention.

Fig. 10 is a diagram showing a magnetic flux pattern in the second embodiment of the invention.

Fig. 11 is a diagram comparing the amounts of magnetic flux in the second embodiment of the invention.

Fig. 12 is a diagram comparing the motor torques in the second embodiment of the.invention.

The invention will be described in detail in connection with its embodiments with reference to the accompanying drawings.

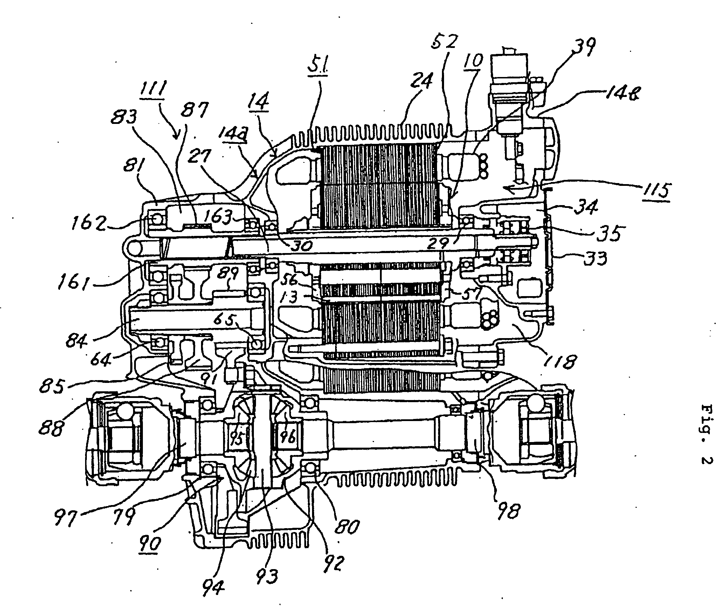

Fig. 2 is a longitudinal sectional view of a permanent magnet type synchronous motor according to a first embodiment of the invention.

In Fig. 2, reference numeral 111 designates a motor assembly, and numeral 14 designates a motor case casing a permanent magnet type synchronous motor 115.

The motor case 14 is composed of a generally bottomed cylindrical portion 14a and a cover portion 14b covering one end of the cylindrical portion 14a to define a sealed motor chamber 118. A plurality of fins 24 are formed on the outer circumference of the cylindrical portion 14a.

Moreover, the cylindrical portion 14a and the cover portion 14b are holed at the bottom center and at the cover center to arrange a motor shaft 27 through the holes, and this motor shaft 27 is rotatably supported by bearings 29 and 30. Moreover, the cover portion 14b is recessed adjacent to the hole, and this recess is closed by a cover member 33 to form a sensor chamber 34.

In this sensor chamber 34, there is arranged a resolver 35 for detecting the position of the magnetic poles of the permanent magnet type synchronous motor 115 on the basis of the rotation of the motor shaft 27.

Specifically, the permanent magnet type synchronous motor 115 includes: a rotor 10 mounted on the motor shaft 27 approximately in the middle thereof in the axial direction so that it is rotated together with the motor shaft 27; and a stator 51 fixed on the inner circumference of the cylindrical portion 14a and opposed to the rotor 10. The stator 51 is composed of a stator iron core 52, and three-phase (i.e., U-phase, V-phase and W-phase) coils 39 wound on the stator iron core 52.

As a result, the rotor 10 can be rotated by feeding the individual coils 39 with the three-phase AC currents which are generated by the not-shown inverter.

The rotor 10 is composed of: a not-shown rotor iron core fitted on the motor shaft 27 with a plurality of electromagnetic steel sheets being laminated; and permanent magnets 13 arranged in the vicinity of the outer circumferential edges of the rotor iron core. The permanent magnets 13 are arranged at an equal pitch in a plurality of circumferential portions of the rotor 10 and are fixed by stoppers 56 and 57 arranged at both ends of the rotor 10, to establish the magnetic poles.

On the other hand, a rear case 81 is attached to the bottom of the cylindrical portion 14a to establish a torque transmission chamber 83 between the bottom of the cylindrical portion 14a and the rear case 81. In the torque transmission chamber 83, moreover, there is arranged a sleeved-like transmission shaft 161 which is coaxially fitted on the motor shaft 27 by means of splines. The transmission shaft 161 is rotatably supported by bearings 162 and 163. In parallel with the transmission shaft 161, on the other hand, there is arranged a counter shaft 84 which is rotatably supported by bearings 64 and 65.

Moreover, a counter gear 87 is fixed on the transmission shaft 161, and a parking gear 85 and a counter driven gear 88 are fixed on the counter shaft 84, such that the counter drive gear 87 and the counter driven gear 88 are made to mesh with each other.

In addition, an output gear 89 is arranged on the counter shaft 84, and its rotation is transmitted to a differential unit 90.

This differential unit 90 is composed of: a differential case 92 equipped with a ring gear 91 on the outer circumference and rotatably supported through bearings 79 and 80; a pinion shaft 93 fixed in the differential case 92; a pinion 94 rotatably supported by the pinion shaft 93; and left and right side gears 95 and 96 meshing with the pinion 94. As a result, the differential unit 90 transmits the rotation, as transmitted to the ring gear 91, separately to left and right drive shafts 97 and 98.

Here will be described the permanent magnet type synchronous motor 115.

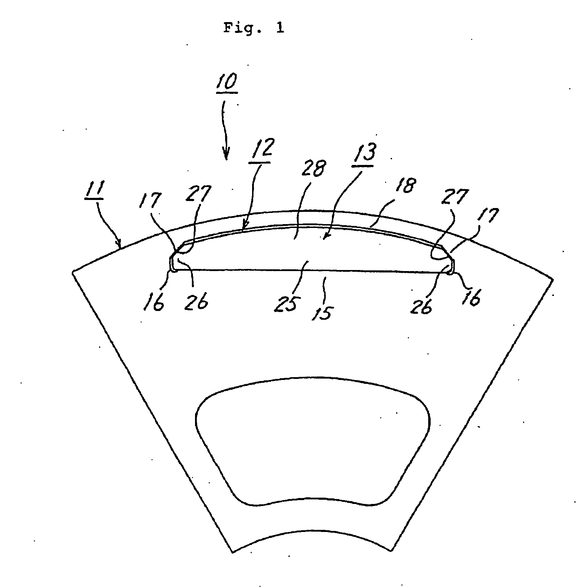

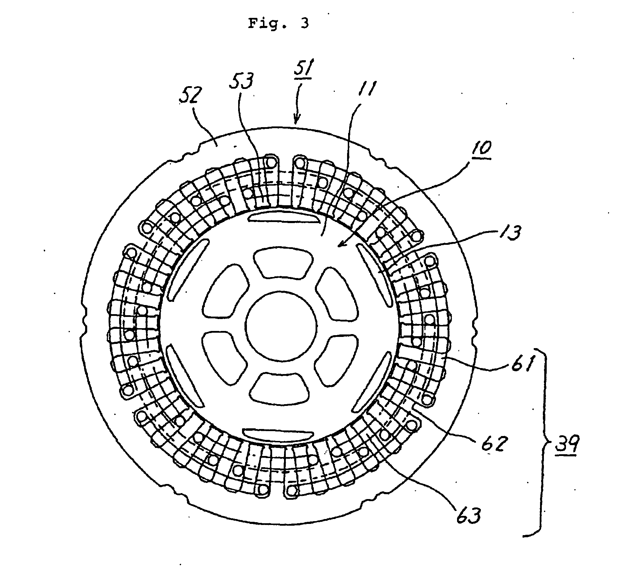

Fig. 1 is a sectional view of an essential portion of a rotor in the first embodiment of the invention, and Fig. 3 is a transverse sectional view of an essential portion of the permanent magnet type synchronous motor according to the first example of the invention.

In these Figures, reference numeral 10 designates a rotor arranged in a rotatable manner, and numeral 11 designates a rotor iron core. The stator 51 is arranged around the rotor 10. On the other hand, reference numeral 52 designates a stator iron core, and numeral 53 designates stator poles which are formed to protrude from a plurality of circumferential portions of the stator iron core 52 toward the rotor 10. In the stator iron core 52, there are arranged the coils 39 which are composed of a U-phase winding 61, a V-phase winding 62 and a W-phase winding 63. In a plurality of circumferential portions of the rotor iron core 11 or six portions in this embodiment, there are formed holes 12 having a section of letter "D". The permanent magnets 13 having a section of letter "D" are assembled by inserting and fixing them in the holes 12.

Each hole 12 is formed of: a straight portion 15 extending in the tangential direction; cut portions 16 formed at both ends of the straight portion 15; tapered portions 17 each extending obliquely outward from the cut portions 16 in the direction of approaching the other; and an arcuate portion 18 extending approximately in parallel with the outer peripheral edge of the rotor iron core 11.

The permanent magnet 13 is shaped to match the shape of the hole 12 and is composed of: a straight portion 25 extending in the tangential direction; rising portions 26 formed at both ends of the straight portion 25; tapered portions 27 each extending obliquely outward from the rising portions 26 in the direction of approaching the other; and an arcuate portion 28 joining the two tapered portions 27 and extending approximately in parallel with the outer circumferential edge of the rotor iron core 11.

Moreover, the hole 12 and the permanent magnet 13 are so sized that the individual tapered portions 17 and 27 butt against each other when the permanent magnet 13 is inserted into the hole 12 while leaving small clearances between the arcuate portions 18 and 28. As a result, the permanent magnets 13 are supported by the tapered portions 17, and, when the rotor 10 is rotated, a centrifugal force is generated in the permanent magnets 13 and is applied to the tapered portions 17 but not to the arcuate portions 18 to make no contribution to the support of the permanent magnets 13, so that the arcuate portions 18 can be prevented from any breakage. Moreover, the small clearance is established between the individual arcuate portions 18 and 28, so that the arcuate portions 18 and 28 are easily faced.

Moreover, each of the tapered portions 17 is formed to be inclined from the cut portions 16 in the direction of approaching the other, so that a sufficient thickness can be retained between the tapered portions 17 and the outer circumferential edge of the rotor iron core 11. As a result, the tapered portions 17 will not break even if the rotor 10. is rotated at a high speed to apply a high centrifugal force to the tapered portions 17. Moreover, obtuse angles are made between the cut portions 16 and the tapered portions 17 and between the tapered portions 17 and the arcuate portion 18, so that the stress can be prevented from being concentrated. This makes it possible to enhance the strength of the rotor iron core 11 around the tapered portions 17.

Here, the arcuate portions 18 cover the permanent magnets 13 radially outside of the permanent magnets 13, so that the fragments of the permanent magnets 13 are prevented, when the permanent magnets 13 are broken or smashed by their own internal defects or by the excessive rotations of the rotor 10, from being scattered therearound. In this case, it is sufficient for the arcuate portions 18 only to have a function to cover the permanent magnets 13, so that their radial size can be reduced to reduce the radial size of the tapered portions 17. As a result, the leakages of magnetic flux from the arcuate portions 18 can be reduced to increase the amount magnetic flux to pass through the gap between the stator 51 and the rotor 10, so that more torque corresponding to that amount can be generated by the permanent magnet type synchronous motor 115 (Fig. 2). In addition, the distortion to occur in the magnetic flux distribution of the gap can be remarkably reduced to reduce the harmonic components in the waveforms in the magnetic flux density thereby to prevent the torque oscillations.

In the vicinity of the tapered portions 17, moreover, the rotor iron core 11 is saturated to suppress the passage of the magnetic fluxes of the arcuate portions 18 near the tapered portions 17. This makes it possible to suppress the short-circuiting of the magnetic fluxes of the arcuate portions 18 at the rotor iron core 11 thereby to increase the amount of magnetic flux to pass through the gap between the stator 51 and the rotor 10. As a result, the motor torque can be increased.

Here, the tapered portions 27 and the arcuate portions 28 of the permanent magnets 13 are magnetized to one polarity, and the straight portions 25 of the permanent magnets 13 are magnetized to the other polarity.

If the current to flow through the coils 39 is a little as in the case that the permanent magnet type synchronous motor 115 is driven in a low torque region, a portion of the magnetic flux of the arcuate portions 18 does not pass through the stator iron core 52 but short-circuits the rotor iron core 11. This short-circuiting and the substantial reduction in the air gap length to lower the magnetic resistance act together to lower the counter electromotive force, so that the number of revolutions of the rotor 10 can be increased without raising the supply voltage. As a result, the d-axis current for a field-weakening control can be accordingly reduced to enhance the efficiency of the permanent magnet type synchronous motor 115.

When the permanent magnet type synchronous motor 115 thus constructed is to be constructed, the work of inserting the permanent magnets 13 into the holes 12 after the permanent magnets 13 are magnetized is made extremely difficult because the holes 12 are attracted by the magnetic forces of the permanent magnets 13. Therefore, the permanent magnets 13 before the magnetization are made to be assembled in the holes 12, and after this, a pulsed magnetic field is generated to magnetize the permanent magnets 13. This facilitates the magnetization because the radial size of the arcuate portions 18 is small.

Here will be described the characteristics of the permanent magnet type synchronous motor 115 of the invention and the characteristics of the permanent magnet type synchronous motor of the related art.

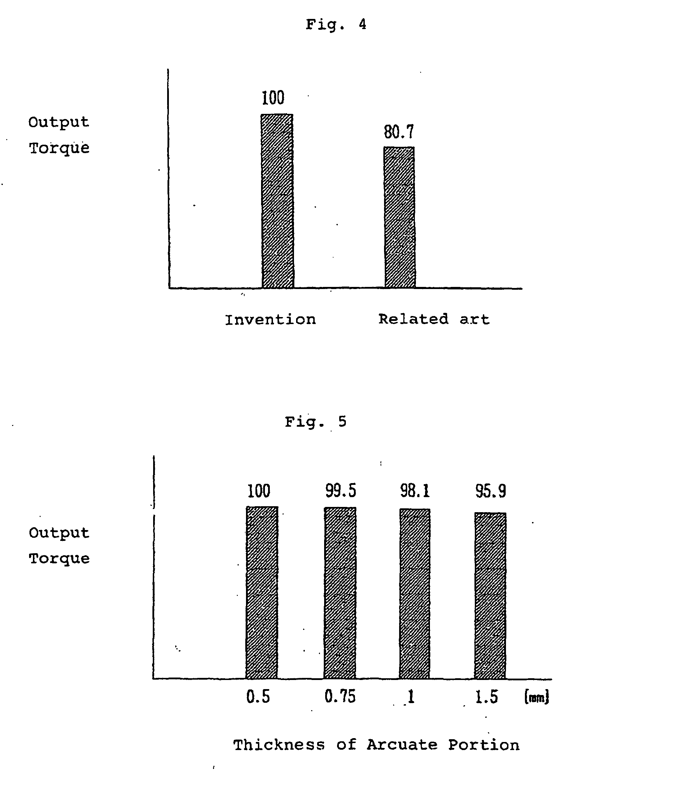

Fig. 4 is a diagram comparing the first characteristics of the permanent magnet type synchronous motor. In Fig. 4, the abscissa indicates the kinds of the permanent magnet type synchronous motor, and the ordinate indicates the output torque.

As is apparent from the diagram, if the permanent magnet type synchronous motor 115 (of Fig. 2) has an output torque of 100, the output torque by the permanent magnet type synchronous motor of the related art is 80.7. Here, both the thickness of the arcuate portions 18 (of Fig. 1) in the permanent magnet type synchronous motor 115 of the invention and the thickness between the outer circumferential edge of the rotor iron core and the permanent magnets in the permanent magnet type synchronous motor of the related art, that is, the iron core thickness of the magnetic pole upper portions are set to 1.5 [mm] to make the magnets equal in volume, thereby to generate counter electromotive forces at the same level.

Fig. 5 is a diagram of the first characteristics of the permanent magnet type synchronous motor according to the first embodiment of the invention. In Fig. 5, the abscissa indicates the thickness of the arcuate portions 18 (of Fig. 1), and the ordinate indicates the output torque.

As is apparent from the diagram, if the permanent magnet type synchronous motor 115 (of Fig. 2) has an output of 100 for a thickness of 0.5 [mm] of the arcuate portions 18, the output torques are 99.5, 98.1 and 95.9, for the thicknesses 0.75 [mm], 1 [mm] and 1.5 [mm] of the arcuate portions 18, respectively.

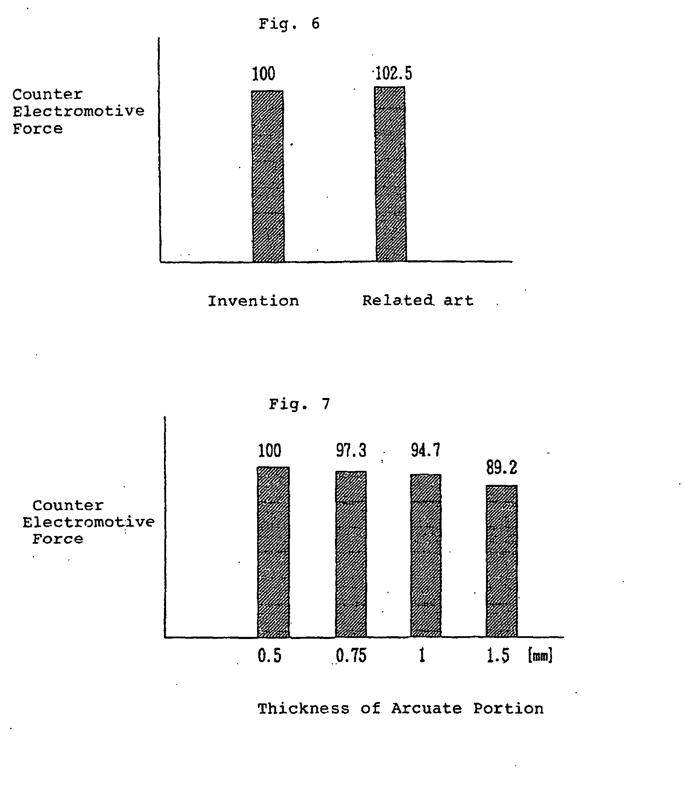

Fig. 6 is a diagram comparing the second characteristics of the permanent magnet type synchronous motor. In Fig. 6, the abscissa indicates the kinds of the permanent magnet type synchronous motor 115 (of Fig. 2), and the ordinate indicates the counter electromotive force.

As is apparent from the diagram, if the permanent magnet type synchronous motor has a counter electromotive force of 100, the counter electromotive force by the permanent magnet type synchronous motor of the related art is 102.5. Here, both the thickness of the arcuate portions 18 (of Fig. 1) in the permanent magnet type synchronous motor 115 of the invention and the iron core thickness of the magnetic pole upper portions in the permanent magnet type synchronous motor of the related art are set to 1.5 [mm] to make the magnets equal in volume thereby to generate counter electromotive forces at the same level.

Fig. 7 is a diagram of the second characteristics of the permanent magnet type synchronous motor according to the first embodiment of the invention. In Fig. 7, the abscissa indicates the thickness of the arcuate portions 18 (of Fig. 1), and the ordinate indicates the counter electromotive force.

As is apparent from the diagram, if the permanent magnet type synchronous motor 115 (of Fig. 2) has a counter electromotive force of 100 for a thickness of 0.5 [mm] of the arcuate portions 18, the counter electromotive forces are 97.3, 94.7 and 89.2 for the thicknesses 0.75 [mm] , 1 [mm] and 1.5 [mm] of the arcuate portions 18, respectively.

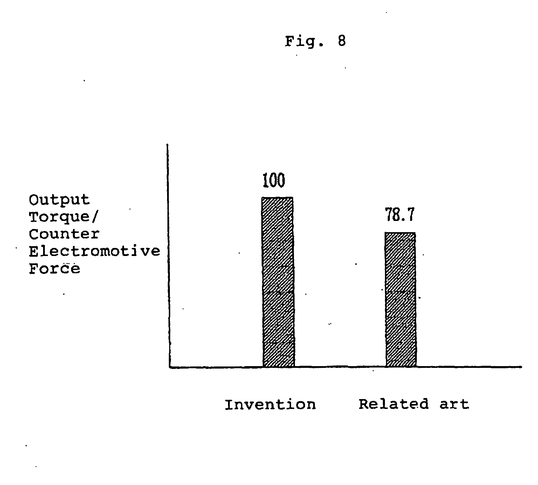

Fig. 8 is a diagram comparing the third characteristics of the permanent magnet type synchronous motor. In Fig. 8, the abscissa indicates the kinds of the permanent magnet type synchronous motor 115 (of Fig. 2), and the ordinate indicates the output torque / counter electromotive force.

As is apparent from the diagram, if the permanent magnet type synchronous motor has an output torque / counter electromotive force of 100, the output torque / counter electromotive force by the permanent magnet type synchronous motor of the related art is 78.7. Here, both the thickness of the arcuate portions 18 (of Fig. 1) in the permanent magnet type synchronous motor 115 of the invention and the iron core thickness of the magnetic pole upper portions in the permanent magnet type synchronous motor of the related art are set to 1.5 [mm] to make the magnets equal in volume thereby to generate counter electromotive forces at the same level.

Here will be described the second embodiment of the invention.

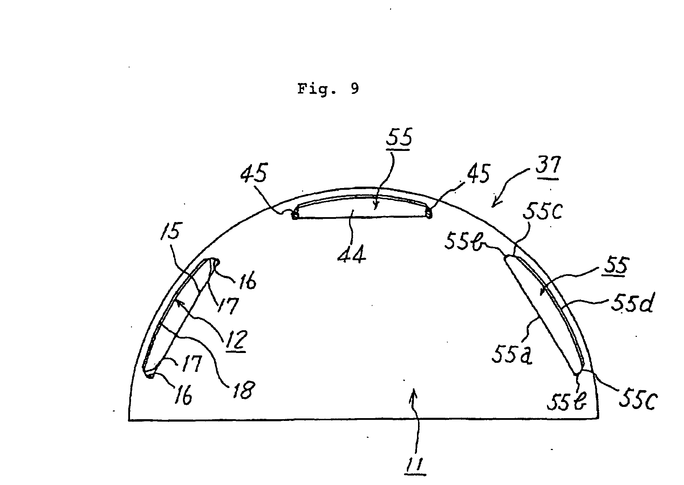

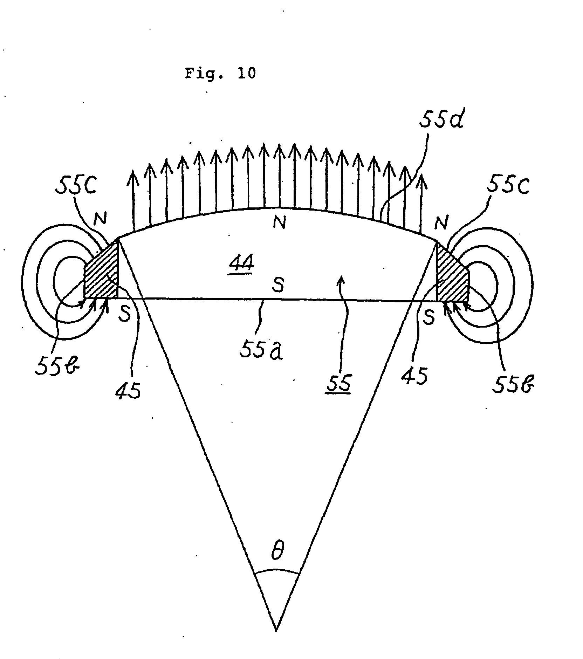

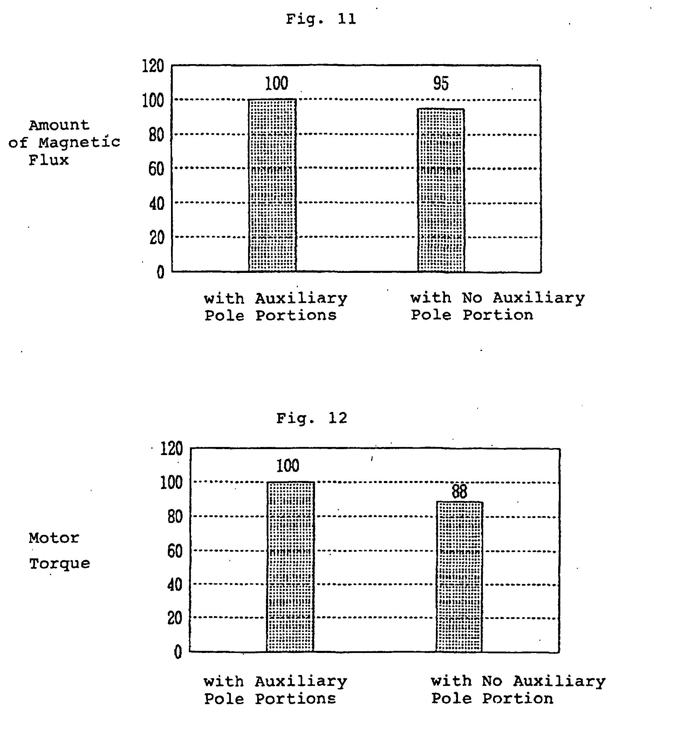

Fig. 9 is an enlarged view of a rotor in the second embodiment of the invention; Fig. 10 is a diagram showing a magnetic flux pattern in the second embodiment of the invention; Fig. 11 is a diagram comparing the amounts of magnetic flux in the second embodiment of the invention; and Fig. 12 is a diagram comparing the motor torques in the second embodiment of the invention.

In Fig. 9: numeral 11 designates a rotor iron core prepared by laminating electromagnetic steel sheets; numeral 37 designates a rotor; and numeral 55 designates permanent magnets. In the rotor iron core 11, there are formed holes for housing and holding the permanent magnets 55.

The permanent magnet 55 is formed into an approximately semicylindrical shape and is composed of: a straight portion 55a extending in the tangential direction; rising portions 55b formed at both ends of the straight portion 55a; tapered portions 55c each extending obliquely outward from the rising portions 55b in the direction of approaching the other; and an arcuate portion 55d jointing the two tapered portions 55c and extending approximately in parallel with the outer circumferential edge of the rotor iron core 11.

Moreover, a main magnetic pole portion 44 is formed between the straight portion 55a and the arcuate portion 55d. Auxiliary pole portions 45 are formed at the magnetic pole end portions adjacent to and integrally with the main magnetic pole portion 44 with the bent portions at the adjoining points between the tapered portions 55c and the arcuate portion 55d forming boundaries. Both the main magnetic pole portion 44 and the auxiliary pole portions 45 are magnetized to the same polarity. In this embodiment, the tapered portions 55c and the arcuate portion 55d are magnetized to one polarity whereas the straight portion 55a is magnetized to the other polarity.

On the other hand, the hole 12 is formed into an approximately semicylindrical shape and is composed of: a straight portion 15 extending in the tangential direction; cut portions 16 formed at both ends of the straight portion; tapered portions 17 each extending obliquely outward from the cut portions 16 in the direction of approaching the other; and an arcuate portion 18 joining the two tapered portions 17 and extending approximately in parallel with the outer circumferential edge of the rotor iron core 11.

Moreover, since the auxiliary pole portions 45 are magnetized, the magnetic fluxes, as generated by the auxiliary pole portions 45, flow from the tapered portions 55c to the rotor iron core 11 approximately normal to the not-shown tapered face.

Thus, the magnetic path can be more saturated in the vicinity of the magnetic pole end portions in the rotor iron core 11, that is, in the vicinity of the auxiliary pole portions 45. As a result, the magnetic fluxes can be prevented frombeing short-circuited at the magnetic pole end portions to accordingly increase the flows of magnetic flux passing through the gap between the stator 51 (of Fig. 3) and the rotor 10, as shown in Fig. 11, thereby to increase the motor torque, as shown in Fig. 12. That is, when the amount of magnetic flux are taken as 100 with the auxiliary pole portions 45, the amount of magnetic flux becomes 95 without the same. When the motor torque is taken as 100 with the auxiliary pole portions 45, the motor torque becomes 88 without the same.

Since the main magnetic pole portion 44 and the auxiliary pole portions 45 are made integral, the permanent magnet type synchronous motor 115 can be simplified in its structure to reduce the numbers of parts and assembling steps thereby to lower the cost for the permanent magnet type synchronous motor 115.

Moreover, the auxiliary pole portions 45 are formed with the bent portions at the adjoining points between the tapered portions 55c and the arcuate portion 55d forming boundaries, so that the distance between the N poles and the S poles in the auxiliary pole portions 45 can be shortened. As a result, not only the volume of the magnets in the auxiliary pole portions 45 can be reduced but also the distance between the outer circumference of the rotor iron core 11 and the auxiliary pole portions 45 can be elongated, so that the magnetic path can be sufficiently saturated.

In addition, the inter-pole distance in the circumferential direction of the rotor 37 can be elongated to enhance the strength of the rotor iron core 11.

Here, the permanent magnets 55 are supported by the tapered portions 17, and centrifugal forces are generated in the permanent magnets 55 when the rotor 10 is rotated. The centrifugal forces are applied to the tapered portions 17 but not to the arcuate portion 18 to make no contribution to the support of the permanent magnets 55, so that the arcuate portion 18 can be prevented from any breakage. Moreover, a small clearance is formed between the individual arcuate portions 18 and 55d, so that the arcuate portions 18 and 55d can be easily faced.

In addition, each of the tapered portions 17 is formed to be inclined from the cut portions 16 in the direction of approaching the other, so that a sufficient thickness can be retained between the tapered portions 17 and the outer circumferential edge of the rotor iron core 11. As a result, the tapered portions will not break even if the rotor 10 is rotated at a high speed to apply a high centrifugal force to the tapered portions 17. Moreover, obtuse angles are made between the cut portions 16 and the tapered portions 17, and between the tapered portions 17 and the arcuate portion 18, so that the stress can be prevented from being concentrated. This makes it possible to enhance the strength of the rotor iron core 11 around the tapered portions 17.

Here, the arcuate portions 18 cover the permanent magnets 55 radially outside of the permanent magnets 55, so that the fragments of the permanent magnets 55 are prevented, when the permanent magnets 55 are broken or smashed by their own internal defects or by the excessive rotations of the rotor 10, from being scattered thereearound. In this case, it is sufficient for the arcuate portions 18 only to have a function to cover the permanent magnets 55, so that their radial size can be reduced to reduce the radial size of the tapered portions 17. As a result, the leakages of magnetic flux from the arcuate portions 18 can be reduced to increase the amount of magnetic flux to pass through the gap between the stator 51 and the rotor 10, so that more torque corresponding to that amount can be generated by the permanent magnet type synchronous motor 115 (of Fig. 2). In addition, the distortion to occur in the magnetic flux distribution of the gap can be remarkably reduced to reduce the harmonic components in the waveforms in the magnetic flux density thereby to prevent the torque oscillations.

If the current to flow through the coils 39 is a little as in the case that the permanent magnet type synchronous motor 115 is driven in a low torque region, a portion of the magnetic flux of the arcuate portions 18 does not pass through the stator iron core 52 but short-circuits the rotor iron core 11. This short-circuiting and the substantial reduction in the air gap length to lower the magnetic resistance act together to lower the counter electromotive force, so that the number of revolutions of the rotor 10 can be increased without raising the supply voltage. As a result, the d-axis current for a field-weakening control can be accordingly reduced to enhance the efficiency of the permanent magnet type synchronous motor 115.

When the permanent magnet type synchronous motor 115 thus constructed is to be constructed, the work of inserting the permanent magnets 55 into the holes 12 after the permanent magnets 55 are magnetized is made extremely difficult because the holes 12 are attracted by the magnetic forces of the permanent magnets 55. Therefore, the permanent magnets 55 before the magnetization are made to be assembled in the holes 12, and after this, a pulsed magnetic field is generated to magnetize the permanent magnets 55. This facilitates the magnetization because the radial size of the arcuate portions 18 is small.

Moreover, if the opening angle of the main magnetic pole portion 44 is designated by θ and if the pitch of the individual stator poles 53 of the stator iron core 52, i.e., the slot pitch is designated by p, then the opening angle θ is expressed as follows:

$$\theta \fallingdotseq (n + 1/2) \cdot p \text{ (n: an integer).}$$

In this case, even if the rotor 37 is rotated to be located in any position with respect to the stator 51, the number of slots between each of the stator poles 53 of the stator iron core 52 confronting the main magnetic pole portions 44 is always at the constant value n. As a result, the generation of the cogging torque can be suppressed to suppress the generation of vibrations.

Here, the invention should not be limited to the foregoing embodiments but could be modified in various manners on the basis of its spirit, and these modifications should not be excluded from the scope of the invention.

According to the invention, as has been described hereinbefore, a permanent magnet type synchronous motor comprises: a rotor iron core rotatably arranged and having holes in a plurality of portions in the circumferential direction; permanent magnets assembled in the holes; a stator iron core; and coils arranged in the stator iron core.

Moreover, the permanent magnet includes a straight portion extending widthwise, tapered portions formed at both ends of the straight portion and each extending obliquely outward in a direction of approaching the other, and an arcuate portion jointing the two tapered portions, and is supported by tapered portions formed at both ends of the holes and each extending obliquely outward in a direction of approaching the other.

In this case, the permanent magnets are supported by the tapered portions, and, when the rotor is rotated, a centrifugal force is generated in the permanent magnets and is applied to the tapered portions of the holes but not to the arcuate portions to make no contribution to the support of the permanent magnets, so that the arcuate portions can be prevented from any breakage.

Moreover, each of the tapered portions is formed to be inclined from the cut portions at both ends of the holes in the direction of approaching the other, so that a sufficient thickness can be retained between the tapered portions and the outer cirumferential edge of the rotor iron core. As a result, the tapered portions will not break even if the rotor is rotated at a high speed to apply a high centrifugal force to the tapered portions. Moreover, obtuse angles are made between the tapered portions and the arcuate portion, so that the stress can be prevented from being concentrated. This makes it possible to enhance the strength of the rotor iron core around the tapered portions.

Moreover, the arcuate portions cover the permanent magnets radially outside of the permanent magnets, so that the fragments of the permanent magnets are prevented, when the permanent magnets are broken or smashed by their own internal defects or by the excessive rotations of the rotor, from being scattered thereearound. In this case, it is sufficient for the arcuate portions only to have a function to cover the permanent magnets, so that their radial size can be reduced to reduce the radial size of the tapered portions. As a result, the leakages of magnetic flux from the arcuate portions can be reduced to increase the amount of magnetic flux to pass through the gap between the stator and the rotor, so that more torque corresponding to that amount can be generated by the permanent magnet type synchronous motor. In addition, the distortion to occur in the magnetic flux distribution of the gap can be remarkably reduced to reduce the harmonic components in the waveforms in the magnetic flux density thereby to prevent the torque oscillations.

In the vicinity of the tapered portions, moreover, the rotor iron core is saturated to suppress the passage of the magnetic fluxes of the arcuate portions near the tapered portions. This makes it possible to suppress the short-circuiting of the magnetic fluxes of the arcuate portions at the rotor iron core thereby to increase the amount of magnetic flux to pass through the gap between the stator and the rotor.

If the current to flow through the coils is a little as in the case that the permanent magnet type synchronous motor is driven in a low torque region, a portion of the magnetic flux of the arcuate portions does not pass through the stator iron core but short-circuits the rotor iron core. This short-circuiting and the substantial reduction in the air gap length to lower the magnetic resistance act together to lower the counter electromotive force, so that the number of revolutions of the rotor can be increased without raising the supply voltage. As a result, the d-axis current for a field-weakening control can be accordingly reduced to enhance the efficiency.

Moreover, the magnetization of the permanent magnets is facilitated because the radial size of the arcuate portions is small.

In another permanent magnet type synchronous motor of the invention, moreover, a clearance is formed between the arcuate portion of the permanent magnet and the arcuate portion of the rotor iron core.

In this case, the clearance is formed between the arcuate portion of the permanent magnet and the arcuate portion of the rotor iron core so that the individual arcuate portions are easily faced.

In still another permanent magnet type synchronous motor of the invention, moreover, the tapered portions and the arcuate portion of the permanent magnet are magnetized to one polarity whereas the straight portion of the permanent magnet is magnetized to the other polarity.

In this case, in the vicinity of the tapered portions, moreover, the rotor iron core is saturated to suppress the passage of the magnetic fluxes of the arcuate portions near the tapered portions. This makes it possible to suppress the short-circuiting of the magnetic fluxes of the arcuate portions at the rotor iron core thereby to increase the amount of magnetic flux to pass through the gap between the stator and the rotor. As a result, the motor torque can be increased.

Still another permanent magnet type synchronous motor of the invention comprises: a rotor rotatably arranged and including a rotor iron core and permanent magnets arranged in the vicinity of the outer circumferential edge of the rotor iron core; and a stator arranged around the outer circumference of the rotor and including a stator iron core and coils wound on the stator iron core.

Moreover, the permanent magnet includes a main magnetic pole portion, and auxiliary pole portions made integral with the main magnetic pole portion at the magnetic pole end portions with bent portions forming boundaries and magnetized to the same polarity as that of the main magnetic pole portion, so that the magnetic paths at the magnetic pole end portions are saturated by the magnetic fluxes flowing out from the auxiliary pole portions.

In this case, since the auxiliary pole portions are magnetized, the magnetic fluxes, as generated by the auxiliary pole portions, flow to the rotor iron core. Thus, the magnetic path can be saturated in the vicinity of the magnetic pole end portions in the rotor iron core. As a result, the magnetic fluxes can be prevented from being short-circuited at the magnetic pole end portions to accordingly increase the flows of magnetic flux passing through the gap between the stator and the rotor, thereby to increase the motor torque.

Since the main magnetic pole portion and the auxiliary pole portions are made integral, the permanent magnet type synchronous motor can be simplified in its structure to reduce the numbers of parts and assembling steps thereby to lower the cost for the permanent magnet type synchronous motor.

Moreover, the auxiliary pole portions are formed with the bent portions forming boundaries, so that the distance between the N poles and the S poles in the auxiliary pole portions can be shortened. As a result, not only the volume of the magnets in the auxiliary pole portions can be reduced but also the distance between the outer circumference of the rotor iron core and the auxiliary pole portions can be elongated, so that the magnetic path can be sufficiently saturated.

In addition, the inter-pole distance in the circumferential direction of the rotor can be elongated to enhance the strength of the rotor iron core.

In still another permanent magnet type synchronous motor of the invention, the auxiliary pole portion has tapered portions.

In this case, since the auxiliary pole portions are magnetized the magnetic fluxes, as generated by the auxiliary pole portions, flow from the tapered portions to the rotor iron core in the direction approximately perpendicular to the rotor iron core.. Thus, the magnetic path can be more saturated in the vicinity of the magnetic pole end portions in the rotor iron core. As a result, the magnetic fluxes can be prevented from being short-circuited at the magnetic pole end portions to accordingly increase the flows of magnetic flux passing through the gap between the stator and the rotor, thereby to increase the motor torque.

In still another permanent magnet type synchronous motor of the invention, moreover, holes matching the permanent magnets and having tapered portions are formed in a plurality of portions in the circumferential direction of the rotor iron core, and the permanent magnets are individually assembled in the holes and supported by the tapered portions.

In this case, a centrifugal forces is generated in the permanent magnets when the rotor is rotated. The centrifugal force is applied to the tapered portions of the holes but not to the arcuate portions to make no contribution to the support of the permanent magnets, so that the arcuate portion can be prevented from any breakage.

Moreover, a sufficient thickness can be retained between the tapered portions and the outer circumferential edge of the rotor iron core. As a result, the tapered portions will not break even if the rotor is rotated at a high speed to apply a high centrifugal force to the tapered portions. Moreover, obtuse angles are made between the tapered portions and the arcuate portion, so that the stress can be prevented from being concentrated. This makes it possible to enhance the strength of the rotor iron core around the tapered portions.

Moreover, the arcuate portions cover the permanent magnets radially outside of the permanent magnets, so that the fragments of the permanent magnets are prevented, when the permanent magnets are broken or smashed by their own internal defects or by the excessive rotations of the rotor, from being scattered therearound. In this case, it is sufficient for the arcuate portions only to have a function to cover the permanent magnets, so that their radial size can also be reduced to reduce the radial size of the tapered portions. As a result, the leakages of magnetic flux from the arcuate portions can be reduced to increase the amount of magnetic flux to pass through the gap between the stator and the rotor, so that more torque corresponding to that amount can be generated by the permanent magnet type synchronous motor. In addition, the distortion to occur in the magnetic flux distribution of the gap can be remarkably reduced to reduce the harmonic components in the waveforms in the magnetic flux density thereby to prevent the torque oscillations.

If the current to flow through the coils is a little as in the case that the permanent magnet type synchronous motor is driven in a low torque region, a portion. of the magnetic flux of the arcuate portions does not pass through the stator iron core but short-circuits the rotor iron core. This short-circuiting and the substantial reduction in the air gap length to lower the magnetic resistance act together to lower the counter electromotive force, so that the number of revolutions of the rotor can be increased without raising the supply voltage. As a result, the d-axis current for a field-weakening control can be accordingly reduced to enhance the efficiency.

Moreover, the magnetization of the permanent magnets is facilitated because the radial size of the arcuate portions is small.

In still another permanent magnet type synchronous motor of the invention, moreover, the opening angle θ of the main magnetic pole portion is set to about the following value of the slot pitch p of the stator iron core:

$$\theta=(n + 1/2)\cdot p \text{ (wherein } n: \text{ an integer).}$$

In this case, even if the rotor is rotated to be located in any position with respect to the stator, the number of slots of the stator iron core confronting the main magnetic pole portions is always at the constant value n. As a result, the generation of the cogging torque can be suppressed to suppress the generation of vibrations.

The entire disclosure of Japanese Patent Application No. 9-317120 filed on November 18, 1997, including specification, claims and drawings, is incorporated herein by reference.

While the invention has been described with reference to preferred embodiments, the foregoing embodiments are merely illustrative of the invention and should not be construed as limiting the invention. Various modifications and applications may be adopted by those skilled in the art without departing from the scope of the appended claims.

## Claims

1. A permanent magnet type synchronous motor comprising a rotor (10;37) rotatably arranged and including a rotor iron core (11) and permanent magnets (13;55) arranged in the vicinity of the outer circumferential edge of said rotor iron core (11), and a stator (51) arranged around the outer circumference of said rotor (10;37) and including a stator iron core (52) and coils (39) wound on said stator iron core (52), said permanent magnet (13;55) including a main magnetic pole portion (25;44), and auxiliary pole portions (45) made integral with said main magnetic pole portion (25;44) at the magnetic pole end portions with bent portions forming boundaries and magnetized to the same polarity as that of said main magnetic pole portion (25;44), so that the magnetic paths at said magnetic pole end portions are saturated by the magnetic fluxes flowing out from said auxiliary pole portions (45).

2. A permanent magnet type synchronous motor as set forth in claim 1, wherein said auxiliary pole portion (45) has tapered portions (27;55c).

3. A permanent magnet type synchronous motor as set forth in claim 1 or 2, wherein holes (12) matching said permanent magnets and having tapered portions (17) are formed in a plurality of portions in the circumferential direction of said rotor iron core (11); and said permanent magnets (13;55) are individually assembled in said holes (12) and supported by said tapered portions (17).

**4.** A permanent magnet type synchronous motor as set forth in any of claims 1 to 3, wherein the opening angle θ of said main magnetic pole portion (25;44) is set to about the following value of the slot pitch P of said stator iron core (52).

$$\theta = (n + 1/2)\cdot p$$

wherein n is an integer.

## Patentansprüche

**1.** Permanentmagnet-Synchronmotor mit:

einem drehbar angeordneten Rotor (10; 37) mit einem Rotoreisenkern (11) und in der Nähe des Außenumfangsrandes des Rotoreisenkerns (11) angeordneten Permanentmagneten (13; 55); und
einem um den Außenumfang des Rotors (10; 37) angeordneten Stator (51) mit einem Statoreisenkern (52) und um den Statoreisenkern (52) gewickelten Wicklungen (39);

wobei der Permanentmagnet (13; 55) einen Hauptmagnetpolabschnitt (25; 44) und Hilfspolabschnitte (45) aufweist, die an Magnetpolendabschnitten mit dem Hauptmagnetpolabschnitt (25; 44) integral ausgebildet sind, wobei geknickte oder gebogene Abschnitte Grenzen bilden, und wobei die Hilfspolabschnitte auf die gleiche Polarität polarisiert sind wie der Hauptmagnetpolabschnitt (25, 44), so daß die magnetischen Wege an den Magnetpolendabschnitten durch die aus den Hilfspolabschnitten (45) heraus fließenden magnetischen Flüsse gesättigt sind.

**2.** Permanentmagnet-Synchronmotor nach Anspruch 1, wobei der Hilfspolabschnitt (45) schräge Abschnitte (27; 55C) aufweist.

**3.** Permanentmagnet-Synchronmotor nach Anspruch 1 oder 2, wobei in mehreren Abschnitten in der Umfangsrichtung des Rotoreisenkerns (11) den Permanentmagneten angepaßte Öffnungen (12) mit schrägen Abschnitten (17) ausgebildet sind, und wobei die Permanentmagnete (13; 55) in den Öffnungen (12) einzeln angeordnet sind und durch die schrägen Abschnitte (17) gehalten werden.

**4.** Permanentmagnet-Synchronmotor nach einem der Ansprüche 1 bis 3, wobei der Öffnungswinkel θ des Hauptmagnetpolabschnitts (25; 44) etwa auf den folgenden Wert der Schlitzteilung p des Statoreisenkerns (52) eingestellt wird:

$$\theta = (n + 1/2)\cdot p$$

wobei n eine ganze Zahl ist.

## Revendications

**1.** Moteur synchrone du type à aimants permanents comprenant un rotor (10 ; 37) agencé à rotation et comportant un noyau en fer (11) de rotor et des aimants permanents (13 ; 55) placés au voisinage du bord circonférentiel extérieur dudit noyau en fer (11) de rotor, et un stator (51) agencé autour de la circonférence extérieure dudit rotor (10 ; 37) et comportant un noyau en fer (52) de stator et des enroulements (39) enroulés sur ledit noyau en fer (52) de stator, ledit aimant permanent (13 ; 55) comportant une partie formant pôle magnétique principal (25 ; 44) et des parties formant pôle auxiliaire (45) réalisées d'un seul tenant avec ladite partie formant pôle magnétique principal (25 ; 44) aux parties d'extrémité de pôle magnétique avec des parties courbées formant des frontières et magnétisées à la même polarité que . celle de ladite partie formant pôle magnétique principal (25 ; 44), de sorte que les lignes de force au niveau desdites parties d'extrémité de pôle magnétique sont saturées par les flux magnétiques sortant desdites parties formant pôle auxiliaire (45).

**2.** Moteur synchrone du type à aimants permanents selon la revendication 1, dans lequel ladite partie formant pôle auxiliaire (45) comporte des parties en biseau (27 ; 55c).

**3.** Moteur synchrone du type à aimants permanents selon la revendication 1 ou 2, dans lequel des trous (12) adaptés auxdits aimants permanents et comportant des parties en biseau (17) sont formés dans une pluralité de parties dans la direction circonférentielle dudit noyau en fer (11) de rotor, et lésdits aimants permanents (13 ; 55) sont montés individuellement dans lesdits trous (12) et supportés par lesdites parties en biseau (17).

**4.** Moteur synchrone du type à aimants permanents selon l'une quelconque des revendications 1 à 3, dans lequel l'angle d' ouverture (θ) de ladite partie formant pôle magnétique principal (25 ; 44) est réglé à peu près sur la valeur suivante de l'écartement des rainures (p) dudit noyau en fer (52) de stator :

$$\theta = (n + 1/2)\cdot p, \text{ où } n \text{ est un entier.}$$

Fig. 1

Fig. 2

Fig. 3

Fig. 4

Output
Torque

100

80.7

Invention          Related art

Fig. 5

Output
Torque

100     99.5     98.1     95.9

0.5     0.75      1       1.5     [mm]

Thickness of Arcuate Portion

Fig. 6

Counter
Electromotive
Force

100   ·102.5

Invention      Related art

Fig. 7

Counter
Electromotive
Force

100   97.3   94.7   89.2

0.5   0.75   1   1.5   [mm]

Thickness of Arcuate Portion

Fig. 8

Output
Torque/
Counter
Electromotive
Force

100

78.7

Invention      Related art

Fig. 9

Fig. 10

Fig. 11

Amount
of Magnetic
Flux

Fig. 12

Motor
Torque